Europäisches Patentamt

European Patent Office

Office européen des brevets

(19)

(11) **EP 0 688 852 B1**

## (12) EUROPÄISCHE PATENTSCHRIFT

(45) Veröffentlichungstag und Bekanntmachung des Hinweises auf die Patenterteilung:
**17.09.1997  Patentblatt 1997/38**

(51) Int Cl.[6]: **C09K 21/14**, B27K 3/50

(21) Anmeldenummer: **95109308.7**

(22) Anmeldetag: **16.06.1995**

(54) **Intumeszierendes Imprägniermittel**

Intumescent impregnation agent

Agent d'imprégnation intumescent

(84) Benannte Vertragsstaaten:
**AT BE CH DE DK ES FR GB IT LI NL SE**

(30) Priorität: **24.06.1994  DE 4422161**

(43) Veröffentlichungstag der Anmeldung:
**27.12.1995  Patentblatt 1995/52**

(73) Patentinhaber: **Dr. Wolman GmbH
D-76547 Sinzheim (DE)**

(72) Erfinder: **Stanek, Richard, Dr.
D-76448 Durmersheim (DE)**

(74) Vertreter: **Karau, Wolfgang, Dr.
BASF Aktiengesellschaft,
Patentabteilung ZDX - C 6
67056 Ludwigshafen (DE)**

(56) Entgegenhaltungen:
EP-A- 0 614 944          WO-A-92/22405
WO-A-93/05118          GB-A- 2 200 363
US-A- 4 165 409

- **DATABASE WPI Week 7639 Derwent Publications Ltd., London, GB; AN 76-72918X & JP-A-51 091 302 (OKURA) , 11.August 1976**
- **DATABASE WPI Week 7418 Derwent Publications Ltd., London, GB; AN 74-33506V & JP-A-48 097 935 (MITSUI) , 13.Dezember 1973**
- **DATABASE WPI Week 9306 Derwent Publications Ltd., London, GB; AN 93-051449 & SU-A-1 717 617 (NESTEROV) , 7.März 1992**
- **DATABASE WPI Week 7639 Derwent Publications Ltd., London, GB; AN 76-72918X & JP-A-51 091 302**
- **DATABASE WPI Week 7418 Derwent Publications Ltd., London, GB; AN 74-33506V & JP-A-48 097 935**
- **DATABASE WPI Week 9306 Derwent Publications Ltd., London, GB; AN 93-051449 & SU-A-1 717 617**

**Beschreibung**

Gegenstand der Erfindung sind wäßrige Intumeszenzlösungen für die Imprägnierung von porösen Trägermaterialien (Holzwerkstoff, Massivholz), und für die Tränkung von Glas- und Mineralfaserplatten, -vliesen, -matten, von Kunststoffdränagematten, von Metallfaservliesen und/oder Metallmatten, von Offenporigen duroplastischen Kunstharzschäumen die so gefertigten Verbundwerkstoffe und deren Verwendung im baulichen Brandschutz und Schallschutz.

Als Inzumeszenzmassen werden Materialien bezeichnet, die unter Als Inzumeszenzmassen werden Materialien bezeichnet, die unter Hitzeeinwirkung aufschäumen und dabei einen isolierenden und feuerbeständigen Schaum ("Thermoschaum") bilden, der die darunter liegenden Flächen und Substrate vor der Feuereinwirkung schützt. Neben der klassischen Dreiermischung Kohlenstoffspender, Dehydrationsmittel und Treibmittel, z.B. Zucker, Ammoniumphosphat und Melamin, sind auch Zweikomponentensysteme entwickelt worden wie z.B. Melaminphosphat in Mischung mit Borsäure und zunehmend kommen auch Einkomponenten-Materialien zum Einsatz. Zu den letzteren zählen neben den altbekannten Alkalisilikaten auch Blähglimmer, Blähgraphit, Perlit, Rohvermiculit u.a.

Die Verwendung der Intumeszenzmassen im baulichen Brandschutz erfolgt in Form von Anstrichen, Lacken, Beschichtungen, Pasten Kitten, Mörteln, Dichtungen, Platten, Zuschnitten, Streifen, Schaumstoffen, Bahnen, Folien, Profilen u.a. Halbzeugen.

Die Verwendung von Mineralfaserplatten oder -matten als Bestandteil von Brandschutzbauteilen ist schon lange bekannt. Neben dem guten Brandwiderstand und der Schalldämmung ist es insbesondere das geringe Raumgewicht, das diese Materialien so interessant für den Einsatz in Brandschutzbauteilen erscheinen läßt.

Verschiedene Einsatzmöglichkeiten sind unter anderem in den deutschen Patentschriften: DE 270 5032, DE 261 3939, DE 274 5345 und DE 265 0915 beschrieben.

Unter Hitzebeanspruchung zeigen die Mineralfaserplatten aber oft eine ungenügende Raumstabilität. Durch Schrumpfen kommt es zur Bildung von Schwachstellen im Randbereich und zum vorzeitigen Versagen von mit Mineralfaserplatten ausgerüsteten Brandschutzbauteilen.

Auch offenporige Trägermaterialien, insbesondere in Form von Schallschutzelementen sind seit langem fester Bestandteil der Bautechnik und in zahlreichen Variationen bekannt. Bedingt durch deren offenen Strukturen bilden sie aber im Brandfall eine Schwachstelle, auch dann, wenn sie selbst aus unbrennbaren Materialien bestehen, wie z.B. Mineralfasern, Porenziegeln, Drahtmatten und dergleichen.

Es besteht die Möglichkeit, derartige poröse Trägerelemente mit einer Intumeszenzmasse zu beschichten, um deren Brandverhalten nachhaltig zu verbessern, wie es z.B. aus den DE 270 3022, DE 281 7268, DE 282 7828, US-PS 437 5516, DE 304 2788 u.a. bekannt ist.

Die zitierten Patentanmeldungen behandeln durchweg Materialien in Form von Schichtwerkstoffen, wie Platten, Folien oder Bahnen, die durch ihre geschlossene Oberfläche von vornherein für gewisse Bereiche, wie z.B. Schallschutz oder Brandabschottung offener Kanäle nicht geeignet sind.

Des weiteren zeigte sich, daß trotz der Vielzahl der auf dem Markt angebotenen Intumeszenzmaterialien eine zufriedenstellende Imprägnierung von mikroporösen Trägermaterialien derzeit nicht durchführbar ist.

Da in vielen potentiellen Einsatzbereichen die Bildung von Kondenswasser nicht ausgeschlossen werden kann, kommen von vornherein nur Imprägniermittel in Frage die wasserunlösliche oder zumindest schwer lösliche Verbindungen bilden. Damit beschränkt sich die Auswahl auf die paar wenigen Feuerschutzfarben und - lacke, die nach der Trocknung wasserfeste Filme bilden.

Tränkversuche von Mineralfaserplatten oder mikroporösen Melaminharzschäumen mit wasserfesten Feuerschutzfarben führten aber zu keinen technisch verwertbaren Ergebnissen. Die pulvrigen Feuerschutzkomponenten wurden an der Oberfläche der Trägermaterialien angereichert, während nur das Bindemittel in das Innere der Trägerplatten diffundierte. Nach der Trocknung bröselten die nur lose anhaftenden Feuerschutzkomponenten ab.

Auch durch die naheliegende Verwendung von nicht pigmentierten Feuerschutzlacken konnte keine gravierende Verbesserung erreicht werden. Mit diesen hochviskosen Formulierungen lassen sich mikroporöse Trägermaterialien nicht durchtränken. Erst nach entsprechender Rückverdünnung kam es zur Durchtränkung der Trägermaterialien. Nach der Trocknung waren aber die eingebrachten Anteile der Feuerschutzkomponenten zu niedrig, um bei den anschließenden Brandprüfungen zu positiven Ergebnissen zu führen.

Die Aufgabe der vorliegenden Erfindung bestand darin, niedrigviskose und hochkonzentrierte intumeszierende Imprägnierlösungen bereitzustellen, mit denen die Einbringmengen auch in schwer imprägnierbaren Trägermaterialien so bemessen werden können, daß die offenporige Struktur des Trägermaterials erhalten bleibt, im Brandfall aber der entstehende Thermoschaum das ganze Volumen des nicht thermoplastischen Trägermaterials verfüllt.

Die Aufgabe konnte überraschenderweise gelöst werden durch die Verwendung einer bindemittelfreien, wäßrigen Imprägnierlösung, deren reaktive Komponenten nach der Trocknung auf der ganzen Oberfläche des Trägermaterials einen durchgehenden, flexiblen und wasserfesten Film bilden.

Gegenstand der Erfindung sind somit wäßrige, intumeszierende Imprägniermittel bestehend aus:

A. 5 - 60 Gew.%, vorzugsweise 10 - 30 Gew.%, phosphorhaltigen Salzen von Harnstoff-Verbindungen;

3. 5 - 60 Gew.%, vorzugsweise 10 - 40 Gew.%, alkoholveretherten Harnstoff- zw. Melamin-Formaldehydharzen;

C. 5 - 40 Gew.%, vorzugsweise 5 - 20 Gew.%, Polyalkoholen bzw. Kohlehydraten;

D. 2 - 12 Gew.%, vorzugsweise 4 - 8 Gew.%, wasserlöslichen Aminen und/oder Polyaminen und/oder Iminen und/ oder Polyiminen, und/oder Polyalkyleniminen;

E. 0 - 5 Gew.%, vorzugsweise 2 - 4 Gew.%, Hochsiedern;

F. 0 - 5 Gew.%, vorzugsweise 1 - 2 Gew.% üblichen Hilfsmittel wie Netzmitteln, Entschäumern, Verdickern, Farbstoffen und dergleichen;

G. 10 - 90 Gew.%, vorzugsweise 20 - 50 Gew.% Wasser;

mit der Maßgabe, daß die Summe der Bestandteile A bis G jeweils 100 Gew.% ergeben.

Als phosphorhaltige Salze können alle wasserlöslichen, phosphorhaltigen Salze von Harnstoffverbindungen verwendet werden, wie z.B. Harnstoff-, Guanidin-, Semicarbazid-, Aminoguanidin-, Dicyandiamid-, Dicyandiamidin-, Thioharnstoff- und Thiosemicarbazidharnstoffphosphat.

Als alkoholveretherte Formaldehydharze werden handelsübliche, methanolveretherte Melamin-Formaldehyd-Harze aus der Madurit®- und Maprenal®-Reihe sowie methanolveretherte Harnstoff-Formaldehyd-Harze aus der Plastopal®-Reihe eingesetzt.

Geeignete Polyalkohole bzw. Kohlehydrate sind u.a. Glyzerin, Trimethylolethan, Trimethylolpropan, Pentaerythrit, Ethylenglykol, Propylenglykol, Butandiol, Hexandiol, Diethylenglykol, Glycose, Saccharose und Carboxymethylcellulose.

Für gewisse Anwendungsbereiche können die Polyalkohole auch ganz oder teilweise durch die entsprechenden Ester von Bor-, Phosphor- oder Schwefelsäure ersetzt werden. So führt z.B. der Einsatz von Glycerophosphorsäure zu einer deutlichen Steigerung des Intumeszenzeffektes.

Unter den wasserlöslichen Aminen gibt es eine Vielzahl von geeigneten Verbindungen, darunter auch die Hydroxy- und/oder Methoxyderivate wie z.B. Monoethanolamin, Diethanolamin, Triethanolamin, Monomethylethanolamin, Methyldiethanolamin, Ethylamin, Diethylamin, Propylamin, Methoxyethylamin, Methoxypropylamin, Dimethylethanolamin, 1,2-Propylendiamin, 3-Amino-1-Methylaminopropan, Tripropylentetramin, Tetrapropylenpentamin, Dipropylentriamin und Hexamethylentetramin. Als geeignete Imine wurden befunden u.a. Ethylenimin und Tetraethylenimin. Unter den Polyiminen sind sowohl niedrigmolekulare Polyethylenimine wie auch hochpolymere Polyethylenimine geeignet.

Wegen ihres geringen Eigengeruchs werden als Hochsieder Methylpropylenglykole und/oder Tributoxyethylphosphat bevorzugt. Als Hilfsmittel sind u.a. die handelsüblichen Netzmittel auf Basis von Polyacrylaten und/oder Polyphosphaten, Alginatverdicker, und Silikonentschäumer für geeignet befunden worden.

Die Funktionsweise der einzelnen Bestandteile der erfindungsgemäßen Imprägnierlösungen können allgemein wie folgt umschrieben werden.

Die Bestandteile A stellen die sauren und die Bestandteile B die alkalischen Intumeszenzträger dar. Die unter C zusammengefaßten Bestandteile fungieren hauptsächlich als Kohlenstoffspender und können somit als neutrale Intumeszenzträger angesehen werden. Die Amine und/oder Imine wirken hier als Stabilisatoren und verhindern das vorzeitige Ausfallen von unlöslichen Reaktionsprodukten. Durch die Verwendung von hochmolekularen Polyethyleniminen kann auch ein deutlicher Verdickungseffekt erreicht werden. Durch den Einsatz der Hochsieder soll während der Trocknungsphase das Auskristallisieren kristallisieren von nicht reagierten Bestandteilen verhindert werden.

Die Topfzeit der erfindungsgemäßen Imprägnierlösungen läßt sich in weiten Grenzen zwischen mehreren Stunden und Tagen variieren. Es können aber auch lagerstabile 2K-Mischungen bereitgestellt werden, die dann erst am Einsatzort miteinander vermischt werden. Die technischen Verwertungsmöglichkeiten der Erfindung werden anhand der nachfolgenden Beispiele erläutert, ohne daß diese nur annähernd das potentielle Anwendungsspektrum abgrenzen.

Zur Unterscheidung der hier nachfolgend gebrauchten Fachbegriffe "Tränken" und "Imprägnieren" muß gesagt werden, daß unter letzterem ein technischer Vorgang verstanden wird, bei dem die Tränkung des porösen Trägermaterials durch den Einsatz von Vakuum und/oder Druck unterstützt wird.

Beispiel 1

Eine hochkonzentrierte Intumeszenzlösung konnte nach folgendem Rezept bereitgestellt werden:

| 1. | Wasser | 29,3 Gew.-% |
|---|---|---|
| 2. | Calgon® N[a]-0,2 Gew.% | 0,2 Gew.-% |
| 3. | Disperbyk®[b] | 0,5 Gew.-% |
| 4. | Melaminharz (Typ MW 112) | 30,0 Gew.-% |
| 5. | Polyethylenimin (Typ Polimin® G 100) | 3,0 Gew.-% |
| 5. | Dipropylentriamin- | 1,0 Gew.-% |
| 6. | Methyldipropylenglykol | 2,0 Gew.-% |
| 7. | Saccharose | 10,0 Gew.-% |
| 8. | Tributoxyethylphosphat | 2,0 Gew.-% |
| 9. | Glycerophosphorsäure (50%ig) | 2,0 Gew.-% |
| 10. | Harnstoffphosphat | 20,0 Gew.-% |
| | Insgesamt | 100,0 Gew.-% |

a: Polyphosphat

b: Alkanolaminsalz einer Polycarbonsäure

Die Topfzeit dieses Konzentrats beträgt ca. 6 - 8 Stunden.

Beispiel 1.1

36 mm starke Weichfaserplatten mit einem Raumgewicht von ca. 300 kg/m$^3$ wurden mit der oben beschriebenen Intumeszenzlösung unter Vacuum imprägniert. Das Konzentrat wurde zuvor mit Wasser in der Relation 1:5 rückverdünnt. Die imprägnierten Platten wurden unter Vacuum getrocknet und zeigten danach ein Raumgewicht von ca. 370 kg/m$^3$.

Nach 3-monatiger Außenbewitterung konnte eine Auswaschrate von 4,2 Gew.% gemessen werden. Danach erbrachte ein Brandschachtversuch nach DIN 4102 eine sichere B1-Klassifikation.

Des weiteren konnte der Brandwiderstandsfaktor dieses brandschützenden Verbundwerkstoffes gemessen werden. Zu diesem Zweck wurde die vertikale Öffnung eines Kleinbrandofens nach DIN 4102, Teil 8 mit einem 50 x 50 cm großen Außschnitt des erfindungsgemäßen Verbundwerkstoffs verschlossen. Der durchgeführte Brandversuch ergab eine Standzeit von 38 Minuten nach Beanspruchung mit der Einheits-Temperaturzeitkurve.

Beispiel 1.2.

2 cm starke Bretter aus Kiefernsplintholz mit den Abmessungen von 100 x 19 cm konnten in einer Technikum-Kesseldruckvacuum-Anlage mit der erfindungsgemäßen Intumeszenzlösung gemäß Beispiel 1, die zuerst mit Wasser in der Relation 1:8 verdünnt wurde, imprägniert werden.

Die mittlere Einbringmenge der Imprägnierlösung betrug ca. 720 kg/m$^3$, was einer Einbringmenge von ca. 50 kg/m$^3$ Feuerschutzkomponenten entspricht.

Nach 3-monatiger Außenbewitterung wurde eine Auswaschrate von ca. 3,6 Gew.% gemessen. Die bewitterten Kiefernbretter bestanden danach unproblematisch eine Brandschutzprüfung nach DIN 4102.

Beispiel 1.3.

Eine 36 mm starke Mineralfaserplatte mit einem Raumgewicht von ca. 40 kg/m$^3$ wurde an den Schmalkanten ca. 3 cm tief mit der erfindungsgemäßen, unverdünnten Intumeszenzlösung nach Beispiel 1 getränkt. Die Einbringmengen betrugen (trocken) ca. 0,1 kg/lfd.m. Kantenlänge.

Die so präparierten Mineralfaserplatten wurden in einem Blechmantel einer 90-minütigen Brandprüfung nach DIN 4102 unterworfen. Die Prüfung der beflammten Muster ergaben, daß die aufgeschäumte Intumeszenzmasse den Randbereich voll ausgefüllt hatte und damit das Schrumpfen der Mineralfaserplatten kompensiert wurde.

Beispiel 2

Eine hochkonzentrierte Intumeszenzlösung konnte nach nachfolgendem Rezept bereitgestellt werden:

| 1. | Wasser - | 28,5 Gew.-% |
|---|---|---|
| 2. | Calgon® N - | 0,2 Gew.-% |

EP 0 688 852 B1

(fortgesetzt)

| | | |
|---|---|---|
| 3. | Disperbyk® - | 0,3 Gew.-% |
| 4. | Harnstoffharz (Typ Plastopal® BTM) - | 27,4 Gew.-% |
| 5. | Pentaerythrit - | 14,3 Gew.-% |
| 6. | Polyethylenimin (Polimin® P) - | 7,1 Gew.-% |
| 7. | Hexamethylentetramin - | 1,4 Gew.-% |
| 8. | Methyldipropylenglykol - | 2,0 Gew.-% |
| 9. | Tributoxyethylphosphat - | 2,0 Gew.-% |
| 10. | Glycerophosphorsäure (50%ig) - | 2,6 Gew.-% |
| 11. | Dicyandiamidinphosphat - | 14,2 Gew.-% |
| | Insgesamt - | 100,0 Gew.-% |

Beispiel 2.1.

Eine Dränagenmatte aus duroplastischem Kunststoff vom Typ Fired 20, mit einer Stärke von 22 mm und einem Flächengewicht von ca. 700 g/m$^2$, wurde mit der erfindungsgemäßen Intumeszenzlösung unverdünnt gleichmäßig beschichtet.

Nach der Trocknung stieg das Flächengewicht der beschichteten Dränagenmatte auf ca. 1500 g/m$^2$. Zwei dieser Dränagenmatten wurden mit einem mittigen Drahtnetz zu einem flexiblen, mechanisch sehr widerstandsfähigen System zusammengebaut und im Kleinbrandofen einer Bauteilprüfung nach DIN 4102 unterworfen. Nach 90 minütiger Beanspruchung nach der Einheits-Temperaturzeitkurve wurde am Außenblech eine max. Temperatur von 280°C und als Mittelwert aller Meßstellen 240°C gemessen.

Beispiel 2.2.

Ein Drahtnetz aus 0,5 mm starken verzinkten Drähten und einem Flächengewicht von ca. 1000 g/m$^2$ wurde mit der erfindungsgemäßen Intumeszenzlösung gemäß Beispiel 2 unverdünnt getränkt. Nach der Härtung und Trocknung erhöhte sich das Flächengewicht des Drahtnetzes auf 1160 g/m$^2$, was einer Aufbringmenge von ca. 160 g/m$^2$ trocken entspricht.

In einem Kleinbrandofen nach DIN 4102, Teil 8, wurde in die obere Öffnung, die normalerweise zur Aufnahme von horizontal beaufschlagten Prüfkörpern dient, ein rechteckiger Ventilationskanal aus Stahlblech eingefügt. Über zwei rechteckige Biegungen mündete der Blechkanal nach 3,8 Metern im Außenbereich. Die lichten Abmessungen betrugen 495 x 495 mm. In Entfernung von ca. 1,5 m vom Ofen war in der Blechummantelung eine Aussparung von ca. 1,5 cm vorgesehen.

Zwei von den erfindungsgemäßen Verbundwerkstoffen wurden in einem Abstand von ca. 1 cm nebeneinander in einem 50 x 50 cm großen Blechrahmen straff eingespannt und das ganze als Feuer- und Rauchschutzsperre in die Aussparung des Blechkanals eingefügt und abgedichtet. Nach Zünden der Ofenbrenner kam es schon nach 1,5 Minuten zum Rauchaustritt an dem Kanalende, das nach ca. 6 - 7 Minuten sein Maximum erreichte und schließlich nach knapp 10 Minuten vollständig aufhörte. Bis zum Abbruch des Versuchs nach 35 Minuten blieb die Feuer- und Rauchsperre dicht.

Beispiel 2.3.

Ein 26 mm Metallfaservlies vom Typ Pacofil® wurde mit der unverdünnten Intumeszenzlösung gemäß Beispiel 2 getränkt. Das Raumgewicht des Metallfaservlieses erhöhte sich dadurch um ca. 40 kg/m$^3$.

Mit dem so gefertigten, erfindungsgemäßen Verbundwerkstoff wurde die waagerechte Öffnung eines Kleinofens nach DIN 4102, Teil 8, verschlossen und mit der Einheits-Temperaturzeitkurve beansprucht. Schon nach knapp 3 Minuten konnte der Durchtritt der heißen Verbrennungsgase gestoppt werden. Bis zum Abbruch des Brandversuchs nach 38 Minuten war der gebildete Thermoschaum völlig intakt geblieben.

Beispiel 3

Eine hochkonzentrierte Intumeszenzlösung konnte nach nachfolgendem Rezept bereitgestellt werden:

| | | |
|---|---|---|
| 1. | Wasser - | 28,3 Gew.-% |

5

(fortgesetzt)

| 2. | Kaliumpoliphosphat - | 0,3 Gew.-% |
|---|---|---|
| 3. | Natriumpolyacrylat - | 0,4 Gew.-% |
| 4. | Melaminharz (Typ Maprenal® MF 920 75 WA) - | 28,1 Gew.-% |
| 5. | Glucose - | 12,7 Gew.-% |
| 6. | Polyethylenimin (Polimin® P) - | 6,8 Gew.-% |
| 7. | Hexamethylentetraamin - | 1,3 Gew.-% |
| 8. | Glyzerin - | 1,8 Gew.-% |
| 9. | Tributoxyethylphosphat - | 1,6 Gew.-% |
| 10. | Thioharnstoffphosphat - | 18,7 Gew.-% |
| | Insgesamt - | 100,0 Gew.-% |

Mit dieser Intumeszenzlösung konnte das Brandverhalten von duroplastischen Schaumstoffen gravierend verbessert werden.

Der offenzellige, weichelastische Schaumstoff auf Basis von Melaminharzen, vom Typ Basotec®, ist bekannt für seine guten Schallabsorptionswerte. Vom Brandverhalten her erfüllt dieses Material die Anforderungen an Baustoffe der Klasse B 1 nach DIN 4102. Durch die niedrige Rohdichte von ca. 12 kg/m$^3$ ergibt sich des weiteren eine geringe Brandlast und Rauchgasdichte.

Es ist deswegen naheliegend, diesen Schaumstoff als Kerneinlage für superleichte Brand- und Schallschutzelemente zu verwenden. Die technische Machbarkeit dieser Idee, scheiterte bisher an der ungenügenden Hitzebeständigkeit der Basotect-Schäume, die schon im Anfangsstadium eines Brandes zu einem starken Schrumpfen des Materials führt. Mit dem erfindungsgemäßen Verbundwerkstoff soll anhand der nachfolgenden Beispiele die Eignung als superleichte Kerneinlage für Brand- und Schallschutzbauteile nachgewiesen werden.

Beispiel 3.1

In einen Holzrahmen aus 4 x 4 cm starken Fichtenkanthölzern und äußeren Abmessungen von 50 x 50 cm wurde mittig eine 30 mm starke Basotect Platte mit einem Raumgewicht von ca. 12 kg/m$^3$ plaziert und beide Seiten dieses Prüfkörpers mit einer 3 mm starken Hartfaserplatte verschlossen. Der so zusammen gebaute Prüfkörper wurde in einem Kleinbrandofen nach DIN 4102, Teil 8, gemäß der Einheits-Temperaturkurve beansprucht. Die Temperaturerhöhung wurde als Mittelwert von 4 an den äußeren Hartfaserplatten postierten Thermoelemente gemessen. Die zulässige Temperaturerhöhung wurde schon nach 10 Minuten überschritten und 40 Sekunden später kam es zum Durchbrand des Prüfkörpers.

Beispiel 3.2

Eine Basotect-Platte mit denselben Abmessungen und Rohdichte wurde unter Vacuum mit der erfindungsgemäßen Intumeszenzlösung gemäß Beispiel 3 imprägniert. Die Imprägnierlösung wurde dabei durch Rückverdünnung mit Wasser in der Relation 1:2,5 zubereitet.

Nach der Vakuumtrocknung bei 50°C zeigte die intumeszierende Basotect-Platte ein Raumgewicht von ca. 33 kg/m$^3$.

Der analog Beispiel 3.1. durchgeführte Versuch ergab eine Standzeit von knapp 17 Minuten.

Beispiel 3.3.

In einem weiteren Analog-Beispiel wurde die Basotect-Platte mit der unverdünnten Intumeszenzlösung gemäß Beispiel 3 imprägniert. Nach der Vacuumtrocknung unter 50°C stieg das Raumgewicht der getrockneten Platte auf 78 kg/m$^3$.

Der analog Beispiel 3.1. und 3.2. durchgeführte Versuch ergab hier eine Standzeit von knapp 34 Minuten.

Damit wurde der Nachweis erbracht, daß mit den erfindungsgemäßen Verbundwerkstoffen die Konzipierung von superleichten Brand- und Schallschutzelementen, wie Türen, Wänden, Decken und dergleichen, technisch realisierbar ist.

Damit wurde der Nachweis erbracht, daß mit den erfindungsgemäßen Verbundwerkstoffen die Konzipierung von superleichten Brand- und Schallschutzelementen, wie Türen, Wänden, Decken und dergleichen, technisch realisierbar ist.

**Patentansprüche**

1.  Intumeszierende Imprägniermittel für poröse Trägermaterialien, bestehend aus:

    A. 5 - 60 Gew.%, vorzugsweise 10 - 30 Gew.% phosphorhaltigen Salzen von Harnstoff-Verbindungen;

    B. 5 - 60 Gew.%, vorzugsweise 10 - 40 Gew.% alkoholveretherten Harnstoff- bzw. Melamin-Formaldehyd-Harzen;

    C. 5 - 40 Gew.%, vorzugsweise 5 - 20 Gew.% Polyalkoholen bzw. Kohlehydraten;

    D. 2 - 12 Gew.%, vorzugsweise 4 - 18 Gew.% wasserlöslicher Aminen und/oder Polyaminen und/oder Iminen und/oder Polyiminen, und/oder Polyalkyleniminen;

    E. 0 - 5 Gew.%, vorzugsweise 2 - 4 Gew.% Hochsiedern;

    F. 0 - 5 Gew.%, vorzugsweise 1 - 2 Gew.% üblicher Hilfsmittel wie Netzmitteln, Entschäumern, Verdickern, stoffen und dergleichen;

    G. 10 - 90 Gew.%, vorzugsweise 20 - 50 Gew.% Wasser;

    mit der Maßgabe, daß die Summe der Bestandteile A - G jeweils 100 Gew.% ergeben.

2.  Intumeszierendes Imprägniermittel, gemäß Anspruch 1, dadurch gekennzeichnet, daß als phosphorhaltige Salze vorzugsweise Harnstoff-, Guanidin-, Semicarbazid-, Aminoguanidin-, Dicyandiamid-, Dicyandiamidin-, Thioharnstoff- und Thiosemicarbazidharnstoff-phosphat eingesetzt werden.

3.  Intumeszierendes Imprägniermittel, gemäß Anspruch 1, dadurch gekennzeichnet, daß als alkoholveretherte Harnstoff- bzw. Melamin-Formaldehyd-Harze, vorzugsweise methanolveretherte Melamin-Formaldehyd-Harze eingesetzt werden.

4.  Intumeszierendes Imprägniermittel, gemäß Anspruch 1, dadurch gekennzeichnet, daß als Polyalkohole bzw. Kohlehydrate, vorzugsweise Pentaerythrit und/oder Glycose und/oder Saccharose und/oder Glycerophosphorsäure eingesetzt werden.

5.  Intumeszierendes Imprägniermittel, gemäß Anspruch 1, dadurch gekennzeichnet, daß als wasserlösliche Amine und/oder Imine vorzugsweise Dipropylentriamin und/oder Hexamethylentetraamin und/oder hochmolekulare Polyethylenimine eingesetzt werden.

6.  Intumeszierndes Imprägniermittel, gemäß Anspruch 1, dadurch gekennzeichnet, daß als Hochsieder vorzugsweise Methyldipropylenglykol und/oder Tributoxyethylphosphat eingesetzt werden.

7.  Verbundwerkstoffe erhalten durch Imprägnierung von Holzwerkstoffen mit Imprägnierlösungen gemäß Ansprüchen 1 - 6.

8.  Verbundwerkstoffe erhalten durch Imprägnierung von Massivholz mit Imprägnierlösungen gemäß Ansprüchen 1 - 6.

9.  Verbundwerkstoffe erhalten durch Tränkung von Glas- und Mineralfaserplatten, -vliesen, und -matten durch Tränkung mit Imprägnierlösungen gemäß Ansprüchen 1 - 6.

10.  Verbundwerkstoffe erhalten durch Tränkung von Kunststoffdränagematten mit Imprägnierlösungen gemäß Ansprüchen 1 - 6.

11.  Verbundwerkstoffe erhalten durch Tränkung von Metallfaservliesen und/oder Metallmatten mit Imprägnierlösungen gemäß Ansprüchen 1 - 6.

12.  Verbundwerkstoffe erhalten durch Tränken von offenporigen, duroplastischen Kunstharz schäumen mit Imprägnierlösungen gemäß Ansprüchen 1 - 6.

13. Verwendung der brandschützenden Verbundwerkstoffe gemäß Ansprüchen 7 - 12 im baulichen Brand- und Schallschutz.

## Claims

1. An intumescent impregnation composition for porous substrate materials, consisting of:

   A. 5 - 60 % by weight, preferably 10 - 30 % by weight, of phosphorus-containing salts of urea compounds;

   B. 5 - 60 % by weight, preferably 10 - 40 % by weight, of alcohol-etherified urea- or melamin-formaldehyde resins;

   C. 5 - 40 % by weight, preferably 5 - 20 % by weight, of polyalcohols or carbohydrates;

   D. 2 - 12 % by weight, preferably 4 - 18 % by weight, of water-soluble amines and/or polyamines and/or imines and/or polyimines and/or polyalkyleneimines;

   E. 0 - 5 % by weight, preferably 2 - 4 % by weight, of high-boiling components;

   F. 0 - 5 % by weight, preferably 1 - 2 % by weight, of conventional auxiliaries, such as wetting agents, antifoams, thickeners, dyes and the like;

   G. 10 - 90 % by weight, preferably 20 - 50 % by weight, of water;

   with the proviso that the sum of constituents A - G is in each case 100 % by weight.

2. An intumescent impregnation composition as claimed in claim 1, wherein the phosphorus-containing salts employed are preferably urea phosphate, guanidine phosphate, semicarbazide phosphate, aminoguanidine phosphate, dicyandiamide phosphate, dicyandiamidine phosphate, thiourea phosphate and thiosemicarbazideurea phosphate.

3. An intumescent impregnation composition as claimed in claim 1, wherein the alcohol-etherified urea- or melamin-formaldehyde resins employed are preferably methanol-etherified melamin-formaldehyde resins.

4. An intumescent impregnation composition as claimed in claim 1, wherein the polyalcohols or carbohydrates employed are preferably pentaerythritol and/or glucose and/or sucrose and/or glycerophosphoric acid.

5. An intumescent impregnation composition as claimed in claim 1, wherein the water-soluble amines and/or imines employed are preferably dipropylenetriamine and/or hexamethylenetetramine and/or high-molecular-weight polyethyleneimines.

6. An intumescent impregnation composition as claimed in claim 1, wherein the high-boiling components employed are preferably methyldipropylene glycol and/or tributoxyethyl phosphate.

7. A composite material obtained by impregnating wooden materials with impregnation solutions as claimed in claims 1-6.

8. A composite material obtained by impregnating solid wood with impregnation solutions as claimed in claims 1-6.

9. A composite material obtained by impregnating glass and mineral fiberboard, nonwovens and mats with impregnation solutions as claimed in claims 1-6.

10. A composite material obtained by impregnating plastic drainage mats with impregnation solutions as claimed in claims 1-6.

**11.** A composite material obtained by impregnating metal fiber nonwovens and/or metal mats with impregnation solutions as claimed in claims 1-6.

**12.** A composite material obtained by impregnating openpore, thermosetting synthetic resin foams with impregnation solutions as claimed in claims 1-6.

**13.** The use of a flame-retardant composite material as claimed in claims 7-12 in building fire and noise protection.

## Revendications

**1.** Agent d'imprégnation intumescent pour matériaux supports poreux, consistant en:

A. 5 - 60 % en poids, de préférence 10 - 30 % en poids de sels phosphorés de composés d'urée;
B. 5 - 60 % en poids, de préférence 10 - 40 % en poids de résines d'urée ou de mélamine-formaldéhyde éthérifiées par un alcool;
C. 5 - 40 % en poids, de préférence 5 - 20 % en poids, de polyalcools ou d'hydrates de carbone;
D. 2 - 12 % en poids, de préférence 4 - 18 % en poids d'amines et/ou de polyamines et/ou d'imines et/ou de polyimines hydrosolubles, et/ou de polyalkylèneimines;
E. 0 - 5 % en poids, de préférence 2 - 4 % en poids de produits à point d'ébullition élevé;
F. 0 - 5 % en poids, de préférence 1 - 2 % en poids d'adjuvants classiques tels que des agents réticulants, des agents antimousse, des épaississants, des colorants et analogues;
G. 10 - 90 % en poids, de préférence 20 - 50 % en poids d'eau;

avec pour condition que la somme des constituants A - G soit dans tous les cas de 100 %.

**2.** Agent d'imprégnation intumescent selon la revendication 1, caractérisé par le fait qu'on emploie comme sels phosphorés de préférence du phosphate d'urée, de guanidine, de semicarbazide, d'aminoguanidine, de dicyandiamide, de dicyandiamidine, de thiourée et de thiosemicarbazide-urée.

**3.** Agent d'imprégnation intumescent selon la revendication 1, caractérisé par le fait qu'on emploie comme résines d'urée ou de mélamine-formaldéhyde éthérifiées par un alcool, de préférence des résines mélamine-formaldéhyde éthérifiées par du méthanol.

**4.** Agent d'imprégnation intumescent selon la revendication 1, caractérisé par le fait qu'on emploie comme polyalcools ou hydrates de carbone, de préférence de la pentaérythrite et/ou du glucose et/ou du saccharose et/ou de l'acide glycérophosphorique.

**5.** Agent d'imprégnation intumescent selon la revendication 1, caractérisé par le fait qu'on emploie comme amines et/ou imines hydrosolubles de préférence de la dipropylènetriamine et/ou de l'hexaméthylènetétraamine et/ou des polyéthylèneimines de masse moléculaire élevée.

**6.** Agent d'imprégnation intumescent selon la revendication 1, caractérisé par le fait qu'on emploie comme produit à point d'ébullition élevé de préférence du méthyldipropylèneglycol et/ou du phosphate de tributoxyéthyle.

**7.** Matériaux composites obtenus par imprégnation de matériaux dérivés du bois avec des solutions d'imprégnation selon les revendications 1 - 6.

**8.** Matériaux composites obtenus par imprégnation de bois massif avec des solutions d'imprégnation selon les revendications 1 - 6.

**9.** Matériaux composites obtenus par imbibition de plaques, de voiles et de mats de verre et de fibres minérales, par imbibition avec des solutions d'imprégnation selon les revendications 1 - 6.

**10.** Matériaux composites obtenus par imbibition de mats de drainage en matière plastique avec des solutions d'imprégnation selon les revendications 1 -6.

**11.** Matériaux composites obtenus par imbibition de voiles de fibres métalliques et/ou de mats métalliques avec des solutions d'imprégnation selon les revendications 1 -6.

12. Matériaux composites obtenus par imbibition de matières alvéolaires de résine synthétique thermodurcissable, à pores ouverts, avec des solutions d'imprégnation selon les revendications 1 -6.

13. Utilisation des matériaux composites ignifugeants selon les revendications 7 - 12 dans la protection des constructions contre les incendies et leur isolation acoustique.